(19) Europäisches Patentamt
European Patent Office
Office européen des brevets

(11) **EP 4 444 590 B1**

(12) **FASCICULE DE BREVET EUROPEEN**

(45) Date de publication et mention
de la délivrance du brevet:
**03.09.2025 Bulletin 2025/36**

(21) Numéro de dépôt: **22834680.5**

(22) Date de dépôt: **16.11.2022**

(51) Classification Internationale des Brevets (IPC):
***B60W 30/16*** *(2020.01)* ***G06V 20/58*** *(2022.01)*
***G06V 20/56*** *(2022.01)*

(52) Classification Coopérative des Brevets (CPC):
**B60W 30/16; G06V 20/58; G06V 20/588;**
B60K 2031/0025; B60W 2420/403; B60W 2520/10;
B60W 2552/53; B60W 2554/4041;
B60W 2554/4042; B60W 2554/804; B60W 2720/10;
B60W 2720/106; B60W 2754/30

(86) Numéro de dépôt international:
**PCT/FR2022/052094**

(87) Numéro de publication internationale:
**WO 2023/105133 (15.06.2023 Gazette 2023/24)**

(54) **PROCÉDÉ DE CONTRÔLE D'UN SYSTÈME DE RÉGULATION ADAPTATIVE DE VITESSE D'UN VÉHICULE**

VERFAHREN ZUR STEUERUNG EINES ADAPTIVEN GESCHWINDIGKEITSREGELSYSTEMS EINES FAHRZEUGS

METHOD FOR CONTROLLING AN ADAPTIVE CRUISE CONTROL SYSTEM OF A VEHICLE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **09.12.2021 FR 2113187**

(43) Date de publication de la demande:
**16.10.2024 Bulletin 2024/42**

(73) Titulaire: **Stellantis Auto SAS
78300 Poissy (FR)**

(72) Inventeur: **VIVET, Luc
75016 PARIS 16 (FR)**

(74) Mandataire: **ESIP
Stellantis Auto SAS
Service REIP - YT800
43, rue Jean Pierre Timbaud
78300 Poissy (FR)**

(56) Documents cités:
DE-A1- 102014 212 700    ES-A1- 2 343 296
US-A1- 2015 100 228      US-A1- 2015 112 580
US-A1- 2019 241 184

**Description**

**Domaine technique**

La présente invention concerne les procédés de contrôle d'un système de régulation adaptative de vitesse d'un véhicule, notamment un véhicule automobile.

**Arrière-plan technologique**

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Le compromis entre le confort et la sécurité des passagers est parfois difficile à trouver.

Lorsqu'il y a une désélection à tort d'un deuxième véhicule pris pour cible par le système ACC d'un premier véhicule, le système ACC peut accélérer le premier véhicule si la vitesse de ce premier véhicule est inférieure à une vitesse de consigne. Cette accélération du premier véhicule peut entrainer une réduction de l'écart de temps entre le premier véhicule et le deuxième véhicule si ce premier véhicule roule à une vitesse supérieure à celle du deuxième véhicule. Lorsque la distance entre le premier véhicule et le deuxième véhicule est relativement importante, la décision de désélectionner ou pas le deuxième véhicule comme cible est ambigüe car certaines informations d'environnement telles que la position, la vitesse relative ou l'accélération du deuxième véhicule ou encore la position des lignes de délimitation de la route sont imprécises. Il est alors difficile de savoir si ce deuxième véhicule circule le long de la trajectoire du premier véhicule. Cette ambiguïté vient notamment d'imprécisions des capteurs. De plus, quand le deuxième véhicule circule à une vitesse proche du premier véhicule, l'écart entre ces deux véhicules reste stable ce qui prolonge d'autant plus cette ambiguïté. Le deuxième véhicule éloigné peut alors être pris pour cible par le système ACC, ce qui n'entraine pas forcément des comportements intempestifs de la régulation tels que des freinages brusques du premier véhicule par exemple. Par contre, si ce deuxième véhicule éloigné est affiché sur un écran du premier véhicule, un conducteur de ce premier véhicule, pourrait se demander, voire s'inquiéter, de la raison que le système ACC continue à se réguler sur un véhicule éloigné.

En outre, l'état de la technique est connu du document US2015100228A1.

**Résumé de la présente invention**

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule en fonction d'un deuxième véhicule circulant devant le premier véhicule sur une même voie de circulation. Le procédé comprend les étapes suivantes :

- détermination d'un indicateur de pertinence associé au deuxième véhicule, l'indicateur de pertinence étant représentatif d'une probabilité que le deuxième véhicule soit sur une trajectoire du premier véhicule, la trajectoire du premier véhicule étant déterminée à partir de données représentatives de la voie de circulation sur laquelle circule le premier véhicule, les données étant obtenues d'une caméra embarquée dans le premier véhicule ;

- détermination d'un indice de gravité en fonction d'une différence entre un temps de gravité et un temps critique, ledit temps de gravité étant fonction, d'une part, d'un écart de vitesse entre le premier véhicule et le deuxième véhicule, et, d'autre part, d'une vitesse moyenne du premier véhicule ;
- détermination d'un indice de pertinence corrigé par correction de l'indice de pertinence en fonction de l'indice de gravité ; et
- contrôle du système ACC en fonction de l'indicateur de pertinence corrigé.

Un tel contrôle de la régulation de vitesse du premier véhicule diminue les freinages inutiles et trop importants, notamment lorsque la vitesse du véhicule cible (c'est-à-dire le deuxième véhicule) est inférieure à celle du premier véhicule et/ou à la vitesse de consigne du système ACC.

Le procédé anticipe l'instant temporel de désélection d'un véhicule cible lorsque ce véhicule est éloigné du premier véhicule. Le procédé permet ainsi au système ACC de désélectionner rapidement des véhicules cibles trop lointains et évite donc d'inquiéter le conducteur du premier véhicule par l'affichage sur un écran de ce véhicule d'une information indiquant que le système ACC est régulé en fonction d'un véhicule lointain.

Selon un mode de réalisation particulier et non limitatif, l'indicateur de pertinence est déterminé en fonction d'une première information représentative d'une quantité de surface du deuxième véhicule couvrant la voie de circulation en fonction d'un temps et d'une deuxième information représentative de distance entre le premier véhicule et le deuxième véhicule.

Selon un mode de réalisation particulier et non limitatif, l'indice de gravité est compris entre 0 et 1.

Selon un mode de réalisation particulier et non limitatif, une différence de pertinence est obtenue à partir de l'indice de gravité, et l'indice de pertinence corrigé est déterminé en soustrayant la différence de pertinence à l'indice de pertinence.

Selon un mode de réalisation particulier et non limitatif, le contrôle du système ACC comprend un ajustement d'une valeur de temps inter-véhicules en fonction de l'indicateur de pertinence corrigé.

Selon un mode de réalisation particulier et non limitatif, l'ajustement de la valeur de temps inter-véhicules est obtenu en déterminant une vitesse ajustée du deuxième véhicule, la vitesse ajustée étant déterminée en fonction d'une vitesse courante du deuxième véhicule et d'une différence entre une vitesse de consigne du système ACC et ladite vitesse courante, ladite différence étant pondérée d'un coefficient de pondération fonction de l'indicateur de pertinence corrigé.

Selon un mode de réalisation particulier et non limitatif, l'indicateur de pertinence corrigé est compris entre 0 et 1, le coefficient de pondération est compris entre 0 et une valeur maximale, le coefficient de pondération est égal à sa valeur maximale lorsque l'indicateur de pertinence corrigé est compris entre 0 et une valeur déterminée inférieure à 1, le coefficient de pondération est suivant une fonction décroissante de l'indicateur de pertinence corrigé lorsque l'indicateur de pertinence corrigé est compris entre ladite valeur déterminée et 1.

Selon un exemple de réalisation particulier et non limitatif, l'indicateur de pertinence est déterminé en fonction d'une première information représentative d'une quantité de surface du deuxième véhicule couvrant la voie de circulation en fonction d'un temps et d'une deuxième information représentative de distance entre le premier véhicule et le deuxième véhicule.

Selon un exemple de réalisation particulier et non limitatif, un indice de gravité est comprise entre 0 et 1.

Selon un exemple de réalisation particulier et non limitatif, une différence de pertinence est obtenue à partir de l'indice de gravité, et l'indice de pertinence corrigé est déterminé en soustrayant la différence de pertinence à l'indice de pertinence.

Selon un exemple de réalisation particulier et non limitatif, le contrôle du système ACC comprend un ajustement d'une valeur de temps inter-véhicules en fonction de l'indicateur de pertinence corrigé.

Selon un exemple de réalisation particulier et non limitatif, l'ajustement de la valeur de temps inter-véhicules de consigne est obtenu en déterminant une vitesse ajustée du deuxième véhicule, la vitesse ajustée étant déterminée en fonction d'une vitesse courante du deuxième véhicule et d'une différence entre une vitesse de consigne du système ACC et ladite vitesse courante, ladite différence étant pondérée d'un coefficient de pondération fonction de l'indicateur de pertinence corrigé.

Selon un exemple de réalisation particulier et non limitatif, l'indicateur de pertinence corrigé est compris entre 0 et 1, le coefficient de pondération est compris entre 0 et une valeur maximale, le coefficient de pondération est égal à sa valeur maximale lorsque l'indicateur de pertinence corrigé est compris entre 0 et une valeur déterminée inférieure à 1, le coefficient de pondération est suivant une fonction décroissante de l'indicateur de pertinence corrigé lorsque l'indicateur de pertinence corrigé est compris entre ladite valeur déterminée et 1.

## Brève description des figures

D'autres caractéristiques et avantages de la présente invention ressortiront de la description des exemples de réalisation particuliers et non limitatifs de la présente invention ci-après, en référence aux figures 1 à 6 annexées, sur lesquelles :

[Fig. 1] illustre schématiquement un premier véhicule suivant un deuxième véhicule sur une portion de route d'un environnement 1, selon un exemple de réalisation particulier et non limitatif de la présente invention ;

[Fig. 2] illustre schématiquement une courbe d'évolution d'une différence de pertinence par rapport à un indice de gravité, selon un exemple de réalisation particulier et non limitatif de la présente invention ;

[Fig. 3] illustre schématiquement des courbes d'évolution d'un indice de pertinence et d'un indice de pertinence corrigé, selon un exemple de réalisation particulier et non limitatif de la présente invention ;

[Fig. 4] illustre schématiquement une fonction entre un coefficient de pondération et l'indicateur de pertinence corrigé, selon un exemple de réalisation particulier et non limitatif de la présente invention

[Fig. 5] illustre schématiquement un dispositif configuré pour contrôler un système de régulation adaptative de vitesse du premier véhicule de la figure 1, selon un exemple de réalisation particulier et non limitatif de la présente invention ; et

[Fig. 6] illustre un organigramme des différentes étapes d'un procédé de contrôle d'un système de régulation adaptative de vitesse du premier véhicule de la figure 1, selon un exemple de réalisation particulier et non limitatif de la présente invention.

## Description des exemples de réalisation

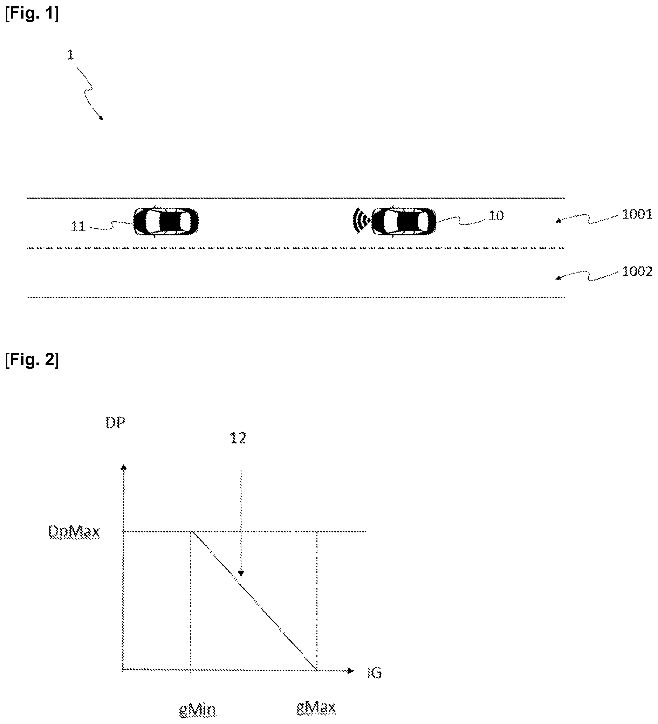

Un procédé et un dispositif de contrôle d'un système de régulation adaptative de vitesse d'un véhicule vont maintenant être décrits dans ce qui va suivre en référence conjointement aux figures 1 à 6. Des mêmes éléments sont identifiés avec des mêmes signes de référence tout au long de la description qui va suivre.

[Fig. 1] illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation. La voie de circulation de droite 1001 correspond par exemple à la voie de circulation considérée comme étant la plus lente et la voie de circulation de gauche 1002 correspond à la voie de circulation considérée comme étant la plus rapide.

Les notions de droite et de gauche sont définies selon le sens de circulation du premier véhicule 10. La voie de circulation « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10.

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple, le premier véhicule 10 embarque un système ADAS correspondant à un système de régulation adaptative de vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse du premier véhicule 10.

Une valeur d'accélération cible est par exemple déterminée à un instant courant $t_0$ à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en $m.s^{-2}$) est par exemple calculée à partir de :

- données représentatives du comportement dynamique du deuxième véhicule 11 (par exemple vitesse et/ou accélération), ces données étant par exemple obtenue à partir d'un ensemble de positions prises par le deuxième véhicule 11 sur un intervalle de temps précédant l'instant courant $t_0$ pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou

- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Le système ACC régule la vitesse du premier véhicule 10 en considérant le deuxième véhicule 11 comme véhicule cible.

Dans une première opération, un indicateur de pertinence IP associé au deuxième véhicule 11 est déterminé. L'indicateur de pertinence IP est représentatif d'une probabilité que le deuxième véhicule 11 se trouve sur une trajectoire du premier véhicule 10, cette trajectoire étant déterminée selon une méthode utilisant la détection de la ou des voies de circulation de la chaussée sur laquelle circule le premier véhicule 10 (méthode de type assignation d'une voie de circulation ou de type aide au maintien dans la voie de circulation).

La détection des voies de circulation 1001, 1002, et notamment de la voie de circulation 1001 dans laquelle se trouve le premier véhicule 10, est obtenue à partir de données reçues d'une ou plusieurs caméras embarquées dans le premier véhicule 10 et ayant dans leur champ de vision l'environnement situé devant le premier véhicule 10 selon le sens de circulation du premier véhicule 10.

La détection des voies se base par exemple sur la détection des marquages au sol matérialisant les bords des voies de circulation 1001, 1002 selon une méthode connue de l'homme du métier. Un exemple de traitement d'image pour détecter les lignes ou marquages au sol est par exemple décrit dans le document WO2017194890A1. Le système de détection de marquage au sol identifie par exemple les lignes en trait continu ou en trait pointillé.

L'indicateur de pertinence IP est déterminé ou calculé à partir de la part de la surface que le deuxième véhicule 11 occupe sur le sol (aussi appelée empreinte au sol) associée à chaque voie de circulation, notamment à la voie de circulation 1001 correspondant à la trajectoire du premier véhicule 10. L'indicateur de pertinence IP est par exemple calculé sur une durée déterminée, qui dépend par exemple de la distance entre le premier véhicule 10 et le deuxième véhicule 11 (par exemple plus la distance est grande plus la durée prise en compte sera importante).

Selon un exemple de réalisation particulier et non limitatif, l'indicateur de pertinence IP est fonction d'une première information représentative d'une quantité de surface du deuxième véhicule couvrant la voie de circulation 1001 (en fonction du temps, c'est-à-dire selon une durée déterminée en fonction par exemple de la distance entre le premier et le deuxième véhicule) et d'une deuxième information représentative de distance entre le premier véhicule et le deuxième véhicule.

Par exemple, si la distance entre le premier véhicule 10 et le deuxième véhicule 11 est inférieure à une valeur seuil (par exemple inférieure à 50, 100 ou 150 m), alors la durée d'évaluation de l'empreinte au sol du deuxième véhicule 11 est égale à 1 seconde (ou 2 secondes selon un autre exemple).

Si la distance entre le premier véhicule 10 et le deuxième véhicule 11 est supérieure à la valeur seuil, alors la durée d'évaluation de l'empreinte au sol du deuxième véhicule 11 est par exemple égale à 3, 5, 7 ou 10 secondes, par exemple selon la distance, la durée augmentant avec la distance.

Par ailleurs, si la part de la surface correspondant à l'empreinte au sol du deuxième véhicule qui couvre la voie de circulation 1001 correspondant à la trajectoire du premier véhicule 10 est supérieure à une valeur seuil (par exemple supérieure à 90, 95 ou 98 %), alors l'indicateur de pertinence IP a une valeur supérieure à 0.9 par exemple (l'indicateur de pertinence IP étant par exemple compris entre -1 et 1, -1 correspondant à la probabilité la plus faible que le deuxième véhicule se trouve sur la trajectoire et 1 correspondant à la probabilité la plus forte que le deuxième véhicule 11 se trouve sur la trajectoire).

Ainsi, plus la part du deuxième véhicule dans la voie de circulation 1001 est grande, plus la valeur de l'indicateur de pertinence IP est élevée.

La part ou le pourcentage du deuxième véhicule dans la voie de circulation 1001 est par exemple obtenu par un procédé de détermination de la répartition surfacique du deuxième véhicule 11 détecté sur les voies de circulation 1001, 1002 en fonction de la position relative d'au moins un point d'intérêt du deuxième véhicule 11 détecté par rapport à la représentation géométrique d'un bord de voie de circulation.

Chaque bord de voie de circulation 1001, 1002 est par exemple représenté par un polynôme, par exemple de degré 3, de la forme : $y = ax^3 + bx^2 + cx + d$, avec a, b, c et d les coefficients du polynôme.

Une répartition surfacique du deuxième véhicule 11 sur les voies de circulation 1001, 1002 est déterminée en fonction par exemple de points d'intérêts (par exemple le point arrière gauche et le point arrière droit) du deuxième véhicule 11 et de la représentation géométrique d'un bord de voie de circulation.

Les points d'intérêt du deuxième véhicule 11 est par exemple déterminé sur la base de dimensions du deuxième véhicule 11 et d'un angle θ formé entre l'axe longitudinal du deuxième véhicule 11 et l'axe longitudinal du premier véhicule 10.

L'intersection, si elle existe, entre un bord de voie de circulation et un segment ayant pour extrémité deux points d'intérêt du deuxième véhicule 11 permet par exemple de déterminer si le deuxième véhicule 11 est à cheval sur deux voies de circulation ou non.

Les points d'intérêt du deuxième véhicule et les bords de voies de circulation permettent ainsi de déterminer dans quelle voie se trouve le deuxième véhicule 11, et, s'il se trouve sur deux voies de circulation (lors d'un changement de voie), quelle est la part du deuxième véhicule dans une première voie et quelle est la part du deuxième véhicule dans une deuxième voie adjacente à la première voie et séparée de la première voie par un bord.

Une telle méthode permet ainsi de déterminer quel pourcentage du deuxième véhicule 11 se trouve dans la voie de circulation 1001 correspondant à la trajectoire.

Dans une deuxième opération, un indice de gravité IG est déterminé en fonction d'une différence entre un temps de gravité TG et un temps critique Tc.

Selon un exemple de réalisation particulier et non limitatif, l'indice de gravité IG est donné par :

$$IG = 1 - \frac{TG - Tc}{tmax - Tc}$$

avec *tmax* un temps maximum par exemple égal à 10s.

Le temps de gravité TG est fonction, d'une part, d'un écart de vitesse *Dv* entre le premier véhicule 10 et le deuxième véhicule 11 et, d'autre part, d'une vitesse moyenne du premier véhicule 10.

Par exemple, $Dv = V_{11} - V_{10} + epsDv\_C$ avec $epsDv\_C = 1m/s$.

Le temps critique Tc est un temps minimum pour que le premier véhicule 10 rejoigne le deuxième véhicule si le comportement dynamique de ces deux véhicules suit un comportement habituel de véhicule circulant sur la voie de circulation 1001. Par exemple, Tc=0,5s.

Selon un exemple particulier et non limitatif, le temps de gravité est donné par :

$$TG = \frac{Dv - Amoy*Tc + \sqrt{(Dv - Amoy*Tc)^2 - 2*Amoy*(DO - V_{10}*Tc)}}{Amoy}$$

avec $V_{10}$ une vitesse du premier véhicule, $D0$ est une distance entre le premier et le deuxième véhicules, et *Amoy* une vitesse moyenne du premier véhicule 10.

Selon un exemple de réalisation particulier et non limitatif, la vitesse moyenne *Amoy* du premier véhicule 10 est donnée par :

$$Amoy = \sqrt{\frac{ji*\left(Vc - min(V_{10} - epsV\_C, Vc)\right)}{6}}$$

avec ji=0,7m/s³.

Les valeurs de *epsDv\_C,* ji, et *epsV\_C* sont des paramètres de calibrage dont les valeurs sont données ici à titre indicatif et ne limitent pas la portée de la présente invention. Le paramètre de calibrage *epsDv\_C* permet de conserver un écart de vitesse positif lorsque l'écart de vitesse entre les deux véhicules est négatif (le deuxième véhicule 11 rouant plus vite que le premier véhicule 10). Le paramètre de calibrage *epsV\_C* permet de sous-estimer la vitesse du premier véhicule.

Selon un exemple de réalisation particulier et non limitatif, l'indice de gravité IG est une valeur réelle comprise entre 0 et 1.

Il tendra vers la valeur 0 lorsque le temps de gravité est très supérieur au temps critique Tc, c'est-à-dire lorsque le risque que le premier véhicule 10 se rapproche rapidement du deuxième véhicule 11 est très faible. Il tendra vers 1 lorsque, a contrario, le temps de gravité est proche du temps critique et que les deux véhicules se rapprochent rapidement l'un de l'autre.

Dans une troisième opération, un indice de pertinence corrigé IPC est déterminé en corrigeant l'indice de pertinence IP en fonction de l'indice de gravité IG.

Selon un exemple de réalisation particulier et non limitatif, une différence de pertinence DP est obtenu à partir de l'indice de gravité IG, et l'indice de pertinence corrigé IPC est déterminé en soustrayant la différence de pertinence DP à l'indice de pertinence IP :

$$IPC = IP - DP \quad (1)$$

[Fig. 2] illustre schématiquement une courbe 12 d'évolution d'une différence de pertinence DP par rapport à un indice de gravité IG selon un exemple de réalisation particulier et non limitatif de la présente invention.

L'indicateur de gravité IG peut correspondre par exemple à une valeur comprise entre 0 et 1 ou à une valeur comprise entre une valeur minimale et une valeur maximale, la valeur minimale étant par exemple égale à 0.3, 0.4, 0.5 ou 0.6 et la valeur maximale étant par exemple égale à 0.9 ou 1.

Selon l'exemple de la figure 2, l'indicateur de gravité IG prend une valeur maximale égale à 1 et une valeur minimale égale à 0.5.

La courbe 12 entre l'indicateur de gravité IG et la différence de pertinence DP selon l'exemple de la figure 2 comprend :

- une première partie selon laquelle la différence de pertinence DP est constante et vaut une valeur maximale DpMax pour un indice de gravité IG compris entre 0 et une valeur minimale de gMin, par exemple égale à 0,5 ; et
- une deuxième partie selon laquelle la différence de pertinence DP décroit au fur et à mesure que l'indice de gravité IG augmente entre la valeur gMin et une valeur maximale gMax par exemple égale à 1 ; DP décroissant selon une fonction linéaire pour passer de la valeur minimale DpMax à la valeur 0.

Dans une quatrième opération, le système ACC du premier véhicule 10 est contrôlé en fonction de l'indicateur de pertinence corrigé IPC.

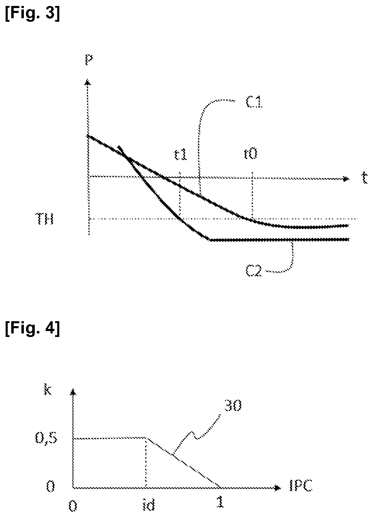

[Fig. 3] illustre schématiquement des courbes d'évolution d'un indice de pertinence et d'un indice de pertinence corrigé selon un exemple de réalisation particulier et non limitatif de la présente invention.

L'évolution temporelle de l'indice de pertinence DP est ici représentée par une courbe C1 représentant une interpolation de valeurs discrètes de l'indice de pertinence IP évalué à des instants temporels 't' prédéterminés. A chacun de ces instants temporels, un indice de gravité IG est déterminé et une valeur de l'indice de pertinence corrigé IPC est obtenue par l'équation (1). L'évolution temporelle de l'indice de pertinence corrigé IPC est ici représentée par une courbe C2 représentant une interpolation des valeurs discrètes de l'indice de pertinence corrigé IPC ainsi déterminées.

On peut noter que la courbe C2 se distingue de la courbe C1 uniquement lors de la phase de décroissance de la courbe C1 c'est-à-dire jusqu'à la désélection du deuxième véhicule 11 comme véhicule cible. Lors de la phase de croissance de la courbe C1, c'est-à-dire lorsque le deuxième véhicule 11 est en passe d'être sélectionné comme véhicule cible, les deux courbes C1 et C2 se confondent. En d'autres termes, la présente invention s'applique à la désélection d'un véhicule cible mais pas à la sélection d'un véhicule cible.

Lorsque l'indice de pertinence IP est faible, la probabilité que le deuxième véhicule 11 soit sur la trajectoire du premier véhicule 10 est faible.

Lorsque l'indice de pertinence IP augmente, cette probabilité augmente et lorsque l'indice de pertinence dépasse un seuil TH, un système ACC habituel du premier véhicule 10 désélectionnerait le deuxième véhicule 11 comme étant un véhicule cible (à l'instant temporel t0) si ce système ACC était contrôlé par l'indice de pertinence IP.

Mais, selon la présente invention, le système ACC du premier véhicule 10 est contrôlé par un indicateur de pertinence corrigé IPC. Ainsi, si l'indice de gravité IG est faible, la différence de pertinence DP est constante et élevée (égale à DpMax de la figure 2). L'indice de pertinence IP est alors fortement corrigé, diminuant ainsi l'instant temporel (t1) où le système ACC du premier véhicule va désélectionner le deuxième véhicule 11 comme véhicule cible (t1<t0).

A contrario, lorsque l'indice de gravité IG est compris entre les valeurs gMin et gMax, la différence de pertinence DP décroît linéairement et l'indice de pertinence IP est alors de plus en plus proche de l'indice de pertinence IP.

Selon un exemple de réalisation particulier et non limitatif, le contrôle du système ACC en fonction de l'indice de pertinence corrigé IPC comprend avantageusement un ajustement d'une valeur ou d'un paramètre de consigne du système en fonction de l'indicateur de pertinence corrigé IPC. Par exemple, le temps inter-véhicules fourni en consigne ($TIV_{consigne}$) ou comme cible ($TIV_{cible}$) est ajusté en fonction de l'indicateur de pertinence corrigé IPC. Le temps inter-véhicules indique le temps mis par le premier véhicule pour rejoindre le deuxième véhicule selon des données d'environnement actuelles.

Par exemple, la valeur cible ou de consigne du TIV est choisie par le conducteur parmi un ensemble de valeurs, par exemple parmi un ensemble comprenant une valeur haute (par exemple égale à 2 s), une valeur intermédiaire (par exemple égale à 1.5 s) et une valeur basse (par exemple égale à 1 s).

La valeur cible ou de consigne du TIV est par exemple ajustée de manière à être :

- maintenue lorsque l'indicateur de pertinence corrigé IPC prend sa valeur maximale ; et
- réduite au fur et à mesure que l'indicateur de pertinence corrigé IPC diminue, la réduction du TIV de consigne ou cible étant par exemple limitée à une valeur minimale.

L'ajustement de la valeur cible ou de consigne du TIV est par exemple obtenue en ajustant la vitesse courante du deuxième véhicule 11 (par exemple déterminée par le premier véhicule 10 à partir des données obtenues du ou des capteurs de détection d'objet embarqués). La vitesse ajustée $V_{ajust}$ du deuxième véhicule est par exemple déterminée en fonction de la vitesse courante $V_{courante}$ du deuxième véhicule 11 et d'une différence entre une vitesse de consigne $V_{consigne}$ du système ACC et la vitesse courante $V_{courante}$, la différence étant pondérée d'un coefficient de pondération, noté k, lequel est fonction de l'indicateur de pertinence corrigé IPC.

La vitesse ajustée $V_{ajust}$ du deuxième véhicule 11 est par exemple obtenue par l'équation suivante :

$$V_{ajust} = V_{courante} + k^*(V_{consigne} - V_{courante})$$

Selon cet exemple de réalisation particulier et non limitatif, l'indicateur de pertinence corrigé IPC permet de moduler ou d'ajuster la vitesse du véhicule cible utilisée en entrée du contrôleur longitudinal du système ACC pour faire en sorte que le premier véhicule 10 freine moins (pour éviter une collision avec le deuxième véhicule ou pour respecter le TIV cible ou de consigne), notamment lorsque le premier véhicule 10 est suffisamment éloigné du deuxième véhicule 11.

[Fig. 4] illustre schématiquement une fonction 30 entre le coefficient de pondération k et l'indicateur de pertinence corrigé IPC, selon un exemple de réalisation particulier et non limitatif de la présente invention ;

Selon l'exemple de la figure 4, l'indicateur de pertinence corrigé IPC est compris entre 0 et 1, le coefficient de pondération k est par exemple compris entre 0 et une valeur maximale (par exemple égale à 0.5 ou à 0.6), le coefficient de pondération k étant égal à sa valeur maximale lorsque l'indicateur de pertinence corrigé IPC est compris entre 0 et une valeur déterminée (notée $I_d$) inférieure à 1, le coefficient de pondération étant suivant une fonction décroissante de l'indicateur de pertinence corrigé IPC lorsque l'indicateur de pertinence est compris entre la valeur déterminée $I_d$ et 1.

Un tel processus permet ainsi d'éviter un freinage trop important du premier véhicule 10 déclenché par le système ACC, notamment lorsque le premier véhicule 10 est à une distance jugée importante (supérieure à un seuil) du deuxième véhicule 11.

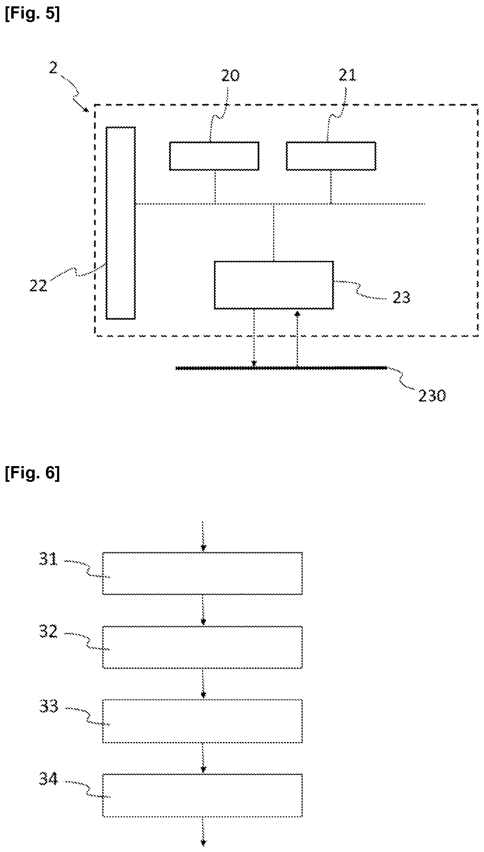

[Fig. 5] illustre schématiquement un dispositif 2 configuré pour contrôler le système ACC d'un véhicule, par exemple du premier véhicule 10, selon un exemple de réalisation particulier et non limitatif de la présente invention. Le dispositif 2 correspond par exemple à un dispositif embarqué dans le premier véhicule 10, par exemple un calculateur.

Le dispositif 2 est par exemple configuré pour la mise en œuvre des opérations décrites en regard des figures 1 à 4 et/ou des étapes du procédé décrit en regard de la figure 6. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes. Les éléments d'interface du bloc 22 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;

- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 2.

[Fig. 6] illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 2 de la figure 5.

Dans une première étape 31, un indicateur de pertinence IP associé au deuxième véhicule 11 est déterminé.

Dans une deuxième étape 32, un indice de gravité IG est déterminé en fonction d'une différence entre un temps de gravité TG et un temps critique Tc.

Dans une troisième étape 33, un indice de pertinence corrigé IPC est déterminé par correction de l'indice de pertinence IP en fonction de l'indice de gravité IG.

Dans une quatrième étape 34, le système ACC est contrôle en fonction de l'indicateur de pertinence corrigé IPC.

Selon une variante, les variantes et exemples des opérations décrits en relation avec les figures 1, 2, 3 et/ou 4 s'appliquent aux étapes du procédé de la figure 6.

Bien entendu, la présente invention ne se limite pas aux exemples de réalisation décrits ci-avant mais s'étend à un procédé de contrôle d'un système de régulation adaptative de vitesse d'un véhicule, par exemple un véhicule autonome, qui inclurait des étapes secondaires sans pour cela sortir de la portée de la présente invention. Il en serait de même d'un dispositif configuré pour la mise en œuvre d'un tel procédé.

## Revendications

1. Procédé de contrôle d'un système de régulation adaptative de vitesse, dit système ACC, d'un premier véhicule (10) en fonction d'un deuxième véhicule circulant devant le premier véhicule sur une même voie de circulation (1001), ledit procédé comprenant les étapes suivantes :

   - détermination (31) d'un indicateur de pertinence associé au deuxième véhicule (11), l'indicateur de pertinence étant représentatif d'une probabilité que le deuxième véhicule (11) soit sur une trajectoire du premier véhicule (10), la trajectoire du premier véhicule (10) étant déterminée à partir de données représentatives de la voie de circulation (1001) sur laquelle circule le premier véhicule (10), les données étant obtenues d'une caméra embarquée dans le premier véhicule (10) ;
   - détermination (32) d'un indice de gravité en fonction d'une différence entre un temps de gravité (TG) et un temps critique (Tc), ledit temps de gravité (TG) étant fonction, d'une part, d'un écart de vitesse entre le premier véhicule et le deuxième véhicule (11), et, d'autre part, d'une vitesse moyenne du premier véhicule ;
   - détermination (33) d'un indice de pertinence corrigé (IPC) par correction de l'indice de pertinence (IP) en fonction de l'indice de gravité (IG) ; et
   - contrôle (34) du système ACC en fonction de l'indicateur de pertinence corrigé (IPC).

2. Procédé selon la revendication 1, pour lequel l'indicateur de pertinence est déterminé en fonction d'une première information représentative d'une quantité de surface du deuxième véhicule couvrant la voie de circulation en fonction d'un temps et d'une deuxième information représentative de distance entre le premier véhicule et le deuxième véhicule.

3. Procédé selon la revendication 1 ou 2, pour lequel l'indice de gravité est compris entre 0 et 1.

4. Procédé selon l'une des revendications 1 à 3, pour lequel une différence de pertinence (DP) est obtenue à partir de l'indice de gravité (IG), et l'indice de pertinence corrigé (IPC) est déterminé en soustrayant la différence de pertinence (DP) à l'indice de pertinence (IP).

5. Procédé selon l'une des revendications 1 à 4, pour lequel le contrôle du système ACC comprend un ajustement d'une valeur de temps inter-véhicules en fonction de l'indicateur de pertinence corrigé (IPC).

6. Procédé selon la revendication 5, pour lequel l'ajustement de la valeur de temps inter-véhicules est obtenu en déterminant une vitesse ajustée du deuxième véhicule, la vitesse ajustée étant déterminée en fonction d'une vitesse courante du deuxième véhicule et d'une différence entre une vitesse de consigne du système ACC et ladite vitesse courante, ladite différence étant pondérée d'un coefficient de pondération fonction de l'indicateur de pertinence corrigé.

7. Procédé selon la revendication 6, pour lequel l'indicateur de pertinence corrigé est compris entre 0 et 1, le coefficient de pondération est compris entre 0 et une valeur maximale, le coefficient de pondération est égal à sa valeur maximale lorsque l'indicateur de pertinence corrigé est compris entre 0 et une valeur déterminée inférieure à 1, le coefficient de pondération est suivant une fonction décroissante de l'indicateur de pertinence corrigé lorsque l'indicateur de pertinence corrigé est compris entre ladite valeur déterminée et 1.


**Patentansprüche**

1. Verfahren zur Steuerung eines ACC-Systems eines ersten Fahrzeugs (10) in Abhängigkeit von einem zweiten Fahrzeug, das auf derselben Fahrspur (1001) vor dem ersten Fahrzeug fährt, wobei das Verfahren die folgenden Schritte umfasst:

    - Bestimmung (31) eines dem zweiten Fahrzeug (11) zugeordneten Relevanzindikators, wobei der Relevanzindikator repräsentativ für eine Wahrscheinlichkeit ist, dass das zweite Fahrzeug (11) auf einer Fahrbahn des ersten Fahrzeugs (10) ist, wobei die Fahrbahn des ersten Fahrzeugs (10) aus Daten bestimmt wird, die repräsentativ für die Fahrspur (1001) sind, auf der das erste Fahrzeug (10) fährt, wobei die Daten von einer im ersten Fahrzeug (10) eingebauten Kamera erhalten werden;
    - Bestimmung (32) eines Schweregrades als Funktion einer Differenz zwischen einer Schwerezeit (TG) und einer kritischen Zeit (Tc), wobei die Schwerezeit (TG) eine Funktion einer Geschwindigkeitsabweichung zwischen dem ersten und dem zweiten Fahrzeug (11) einerseits und einer Durchschnittsgeschwindigkeit des ersten Fahrzeugs andererseits ist;
    - Bestimmung (33) eines korrigierten Relevanzindex (KPI) durch Korrektur des Relevanzindex (PI) nach dem Schweregrad (IG) und
    - Überprüfung (34) des ACC-Systems auf der Grundlage des korrigierten Relevanzindikators (KPI).

2. Verfahren nach Anspruch 1, bei dem der Relevanzindikator in Abhängigkeit von einer ersten Information bestimmt wird, die repräsentativ ist für eine Oberflächenmenge des zweiten Fahrzeugs, die die Fahrspur als Funktion einer Zeit abdeckt, und einer zweiten Information, die repräsentativ ist für eine Entfernung zwischen dem ersten Fahrzeug und dem zweiten Fahrzeug.

3. Verfahren nach Anspruch 1 oder 2, bei dem der Schweregrad zwischen 0 und 1 liegt.

4. Verfahren nach einem der Ansprüche 1 bis 3, bei dem aus dem Schweregradindex (IG) eine Relevanzdifferenz (DP) erhalten wird und der korrigierte Relevanzindex (IPC) durch Subtraktion der Relevanzdifferenz (DP) vom Relevanzindex (IP) bestimmt wird.

5. Verfahren nach einem der Ansprüche 1 bis 4, bei dem die Steuerung des ACC-Systems eine Anpassung eines Fahrzeugintertaktwerts in Abhängigkeit von dem korrigierten Relevanzindikator (IPC) umfasst.

6. Verfahren nach Anspruch 5, bei dem die Einstellung des Zeitwertes zwischen Fahrzeugen durch Bestimmen einer angepassten Geschwindigkeit des zweiten Fahrzeugs erhalten wird, wobei die angepasste Geschwindigkeit in Abhängigkeit von einer aktuellen Geschwindigkeit des zweiten Fahrzeugs und einer Differenz zwischen einer ACC-Systemsollgeschwindigkeit und der aktuellen Geschwindigkeit bestimmt wird, wobei die Differenz mit einem Gewichtungskoeffizienten in Abhängigkeit von dem korrigierten Relevanzindikator gewichtet wird.

7.  Verfahren nach Anspruch 6, bei dem der korrigierte Relevanzindikator zwischen 0 und 1 liegt, der Gewichtungskoeffizient zwischen 0 und einem Maximalwert liegt, der Gewichtungskoeffizient gleich seinem Maximalwert ist, wenn der korrigierte Relevanzindikator zwischen 0 und einem bestimmten Wert kleiner als 1 liegt, der Gewichtungskoeffizient gemäß einer abnehmenden Funktion des korrigierten Relevanzindikators ist, wenn der korrigierte Relevanzindikator zwischen dem bestimmten Wert und 1 liegt.

**Claims**

1.  A method of controlling an adaptive speed control system, referred to as an ACC system, of a first vehicle (10) as a function of a second vehicle travelling in front of the first vehicle on the same taxiway (1001), said method comprising the following steps:

    - determination (31) of a relevance indicator associated with the second vehicle (11), the relevance indicator being representative of a probability that the second vehicle (11) is on a trajectory of the first vehicle (10), the trajectory of the first vehicle (10) being determined from data representative of the taxiway (1001) on which the first vehicle (10) is travelling, the data being obtained from a camera on board the first vehicle (10);
    - determination (32) of a seriousness index as a function of a difference between a seriousness time (TG) and a critical time (Tc), said seriousness time (TG) being a function, on the one hand, of a speed variance between the first and the second vehicles (11) and, on the other hand, of an average speed of the first vehicle;
    - determination (33) of a corrected relevance score (CPI) by correcting the relevance score (PI) by the seriousness score (GI); and
    - control (34) of the ACC system according to the corrected relevance indicator (CPI).

2.  Method according to claim 1, for which the relevance indicator is determined as a function of a first piece of information representative of a quantity of surface of the second vehicle covering the taxiway as a function of time and of a second piece of information representative of distance between the first vehicle and the second vehicle.

3.  Method according to claim 1 or 2, for which the seriousness index is between 0 and 1.

4.  Method according to one of claims 1 to 3, for which a difference in relevance (DP) is obtained from the seriousness index (IG), and the corrected relevance index (IPC) is determined by subtracting the difference in relevance (DP) from the relevance index (IP).

5.  Method according to one of claims 1 to 4, for which the control of the ACC system comprises an adjustment of an inter-vehicle time value according to the corrected relevance indicator (IPC).

6.  Method according to claim 5, for which the adjustment of the inter-vehicle time value is obtained by determining an adjusted speed of the second vehicle, the adjusted speed being determined as a function of a current speed of the second vehicle and of a difference between a reference speed of the ACC system and the said current speed, the said difference being weighted by a balance coefficient as a function of the corrected relevance indicator.

7.  Method according to claim 6, for which the corrected relevance indicator is between 0 and 1, the balance coefficient is between 0 and a maximum value, the balance coefficient is equal to its maximum value when the corrected relevance indicator is between 0 and a determined value less than 1, the balance coefficient is according to a decreasing function of the corrected relevance indicator when the corrected relevance indicator is between the said determined value and 1.

[Fig. 1]

[Fig. 2]

[Fig. 3]

[Fig. 4]

[Fig. 5]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015100228 A1
- WO 2017194890 A1